# EUROPÄISCHE PATENTANMELDUNG

(11) **EP 1 992 413 A1**
(43) Veröffentlichungstag der Anmeldung: **19.11.2008**
(21) Anmeldenummer: 08008965.9
(22) Anmeldetag: 15.05.2008
(51) Int. Cl.: B05B 1/00, B23K 1/005

(54) **Verfahren zum Herstellen einer Sprühdüse und Sprühdüse**

(30) Priorität: 15.05.2007 DE 102007024221
(71) Anmelder: Lechler GmbH, 72555 Metzingen (DE)
(72) Erfinder: Fecht, Albert, 72585 Riederich (DE); Frick, Jürgen, 71384 Weinstadt-Endersbach (DE)
(74) Vertreter: Patentanwälte Ruff, Wilhelm, Beier, Dauster & Partner

(57) **Zusammenfassung**

Verfahren zum Herstellen einer mehrteiligen Sprühdüse, insbesondere einer Sprühdüse.
Die Erfindung betrifft ein Verfahren zum Herstellen einer Hochdruckdüse.
Erfindungsgemäß ist das Anbringen einer umlaufenden Metalllotnaht (28) mittels Laserlöten zum Abdichten von Einzelteilen der Düse gegeneinander vorgesehen.
Verwendung z.B. bei Hochdruckdüsen zum Entzundern von Stahlerzeugnissen.

## Beschreibung

Die Erfindung betrifft ein Verfahren zum Herstellen einer mehrteiligen Sprühdüse, insbesondere einer Hochdruckdüse sowie eine Hochdruckdüse mit einem Mundstück und einem Düsengehäuse.

Hochdruckdüsen werden beispielsweise zur Entzunderung von Stahlerzeugnissen eingesetzt. Zum Einsatz kommen üblicherweise Flachstrahldüsen, mit denen eine Zunderschicht auf einem Stahlerzeugnis entfernt wird. Solche Hochdruckdüsen können ein Mundstück aus Hartmetall aufweisen und ein Düsengehäuse aus Edelstahl, in das das Mundstück eingesetzt ist. Aufgrund der sehr hohen Betriebsdrücke von mehreren 100 bar bis zu 600 bar muss das Mundstück sorgfältig gegen das Düsengehäuse abgedichtet sein, um zu verhindern, dass Wasser zwischen Mundstück und Gehäuse eindringt und dann unkontrolliert aus der Düse austritt oder das Düsengehäuse sogar beschädigt. Üblicherweise werden hierzu hochdruckfeste Dichtungsringe eingesetzt.

Mit der Erfindung sollen ein verbessertes Verfahren zum Herstellen einer Hochdruckdüse und eine verbesserte Hochdruckdüse bereitgestellt werden.

Erfindungsgemäß ist hierzu ein Verfahren zum Herstellen einer Hochdruckdüse vorgesehen, bei dem Einzelteile der Düse durch Anbringen einer umlaufenden Metalllotnaht mittels Laserlöten gegeneinander abgedichtet werden.

Anstatt durch Einlegen einer hochdruckfesten Dichtung hat sich überraschenderweise herausgestellt, dass durch Anbringen einer umlaufenden Metalllotnaht mittels Laserlöten eine zuverlässige Abdichtung hergestellt werden kann. Ein ganz wesentlicher Vorteil gegenüber einem konventionellen Dichtring besteht beim Anbringen einer umlaufenden Metalllotnaht darin, dass keine exakt gearbeiteten Dichtflächen zur Verfügung gestellt werden müssen. Beispielsweise kann die Metalllotnaht als Abdichtung in einer Kehle angebracht werden, in der die zwei gegeneinander abzudichtenden Bauteile aufeinander stoßen. Im Unterschied zu herkömmlichen Dichtringen sind also keine im Wesentlichen parallel zueinander ausgerichteten Dichtflächen erforderlich, es ist vielmehr auch möglich, senkrecht aufeinanderstoßende Flächen mittels der Metalllotnaht abzudichten. Dies erleichtert die Herstellung der Hochdruckdüse, da mechanische Bearbeitungsschritte zum Herstellen und Bearbeiten der Dichtflächen sowie weitere zur Abdichtung erforderlicher Bauteile, beispielsweise Dichtungen und Büchsen, eingespart werden können. Gegenüber herkömmlichen Lötverfahren findet nur eine sehr lokal begrenzte Erwärmung statt, so dass auch Hartmetallteile und vergütete Stahlteile gegeneinander abgedichtet werden können, ohne Veränderungen der Werkstoffeigenschaften befürchten zu müssen.

In Weiterbildung der Erfindung wird ein Nd: YAG-Festkörperlaser verwendet. Ein solcher Laser ist bezüglich seiner optischen Leistung gut regelbar, kann exakt und stark fokussiert werden und schafft dadurch die Voraussetzungen für das Herstellen einer hochpräzisen Metalllotnaht. Speziell können im Querschnitt sehr kleine Metalllotnähte hergestellt werden, so dass für die Metalllotnaht als Abdichtung kein nennenswerter zusätzlicher Raumbedarf entsteht. Ein Nd: YAG-Festkörperlaser weist einen Neodym dotierten Yttrium-Aluminium-Granat-Kristall auf, der infrarote Strahlung mit einer Wellenlänge von 1064nm emittiert. Der Laser wird vorteilhafterweise mit 3 kW Laserleistung im Dauerbetrieb betrieben.

In Weiterbildung der Erfindung wird ein Mundstück gegen ein Düsengehäuse mittels Anbringen einer umlaufenden Metalllotnaht abgedichtet.

Nach dem Einsetzen eines Mundstücks in ein Düsengehäuse kann das Mundstück gegen das Düsengehäuse mittels Anbringen einer umlaufenden Metalllotnaht abgedichtet werden. Beispielsweise wird das Mundstück in ein rohrförmiges Düsengehäuse eingesetzt und die abzudichtende Stelle ist daraufhin nur schwer zugänglich. Hier ist es mittels automatisierten Laserlötens möglich, eine hochpräzise Metalllotnaht als Abdichtung anzubringen.

In Weiterbildung der Erfindung besteht das Mundstück aus Hartmetall oder einer Hartmetalllegierung. Gerade bei Mundstücken aus Hartmetall oder Hartmetalllegierungen ist es von großem Vorteil, nicht zusätzlich noch Dichtflächen für das Anbringen eines konventionellen Dichtringes vorsehen zu müssen.

In Weiterbildung der Erfindung besteht das Düsengehäuse aus Edelstahl oder einer Edelstahllegierung.

Mittels Laserlöten lassen sich Bauteile aus Hartmetall und Edelstahl gegeneinander abdichten. Hartmetallmundstücke kommen vor allem bei stark belasteten Hochdruckdüsen zum Einsatz und durch Vorsehen einer Metalllotnaht zwischen dem Mundstück aus Hartmetall und dem Düsengehäuse aus Edelstahl kann eine zuverlässige Abdichtung gewährleistet werden, die wenig Bauraum beansprucht.

In Weiterbildung der Erfindung wird die Metalllotnaht als Kehlnaht in einem Bereich angebracht, in dem Flächen der abzudichtenden Einzelteile im Wesentlichen rechtwinklig aufeinanderstoßen.

Mittels Laserlöten ist es möglich, eine Metalllotnaht raupenähnlich als Kehlnaht aufzubringen. Die gewünschte Abdichtfunktion kann durch die Kehlnaht alleine gewährleistet werden. Durch die exakte Fokussierung und exakte Regelung der optischen Leistung des Lasers kann die Kehlnaht in einem räumlich exakt definierten Bereich gehalten werden.

In Weiterbildung der Erfindung werden Einzelteile der Düse mittels Metallpulverspritzguss hergestellt.

Auf diese Weise können Einzelteile der Düse auch mit sehr komplizierter räumlicher Formgebung hergestellt werden. Auch solche Sinterteile lassen sich mittels einer Metalllotnaht zuverlässig gegeneinander abdichten. Dies gilt speziell für die Abdichtung eines mittels Metallpulverspritzguss hergestellten Hartmetallmundstücks gegen ein Düsengehäuse aus Edelstahl. Das Düsengehäuse kann als Drehteil hergestellt sein oder ebenfalls mittels Metallpulverspritzguss. Beim Metallpulverspritzguss wird zunächst feines Metallpulver mit einem thermoplastischen Binder vermischt. Die enthaltene Mischung wird dann mittels Spritzgießen in eine Form gebracht. Anschließend wird durch chemische oder thermische Behandlung der Binder entfernt. Ergebnis ist ein vergleichsweise fragiles Gebilde aus einer Metallpulverstruktur. Dieses Zwischenprodukt wird dann gesintert, so dass ein stabiles, kompaktes Sinterteil entsteht.

Das der Erfindung zugrundeliegende Problem wird auch durch eine Sprühdüse, insbesondere eine Hochdruckdüse mit einem Mundstück und einem Düsengehäuse gelöst, bei dem das Mundstück gegen das Düsengehäuse mittels einer Metalllotnaht abgedichtet ist. Das Mundstück kann aus Hartmetall oder einer Hartmetalllegierung und das Düsengehäuse aus Edelstahl oder einer Edelstahllegierung bestehen.

Weitere Merkmale und Vorteile der Erfindung ergeben sich aus den Ansprüchen und der nachfolgenden Beschreibung einer bevorzugten Ausführungsform der Erfindung im Zusammenhang mit den Zeichnungen. In den Zeichnungen zeigen:
- Fig. 1: eine Schnittansicht einer erfindungsgemäßen Hochdruckdüse und
- Fig. 2: eine vergrößerte Darstellung eines Düsengehäuses mit Mundstück der Hochdruckdüse der Fig. 1.

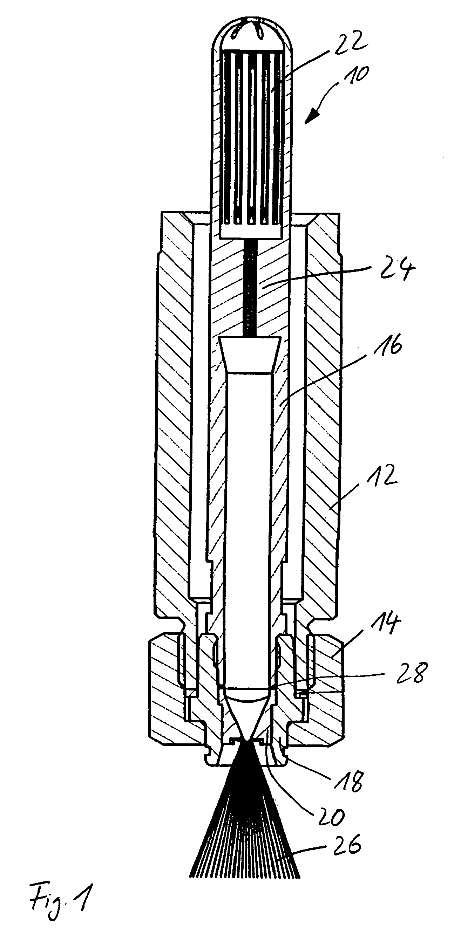

Die Darstellung der Fig. 1 zeigt die Schnittansicht einer erfindungsgemäßen Hochdruckdüse 10 zum Entzundern von Stahlerzeugnissen Die Hochdruckdüse 10 ist in ein Lanzenrohr 12 eingebaut und an dem Lanzenrohr 12 mittels einer Überwurfmutter 14 befestigt. Die Hochdruckdüse 10 weist einen Filter- und Strahlrichterabschnitt 16 auf, der mit seinem stromabwärts gelegenen Ende in ein Düsengehäuse 18 eingebracht ist. Im Düsengehäuse 18 ist ein Mundstück 20 angeordnet. Zwischen dem Filter- und Strahlrichterabschnitt 16 und dem Lanzenrohr 12 ist ein umlaufender Ringraum gebildet. Die Düse 10 ragt mit ihrem Filter 22 in ein nicht dargestelltes Zuführrohr hinein, über das zu versprühendes Wasser zugeführt wird. Das Wasser tritt in den Filter 22 ein, passiert einen Strahlrichter 24 und gelangt zum Mundstück 20. Aus dem Mundstück 20 tritt das Wasser dann in Form eines Flachstrahls 26 aus und kann zur Entzunderung von Stahlerzeugnissen genutzt werden.

Der Filter- und Strahlrichterabschnitt 16 ist mit seinem stromabwärts gelegenen Ende in das Düsengehäuse 18 eingeschraubt. Ein Innendurchmesser des Filter- und Strahlrichterabschnitts 16 entspricht an diesem stromabwärts gelegenen Ende einem Innendurchmesser des Mundstücks 20, so dass an der Stoßstelle zwischen Filter- und Strahlrichterabschnitt 16 und dem Mundstück 20 keine Querschnittsveränderung des Strömungskanals vorliegt. Um Längentoleranzen des Filter- und Strahlrichterabschnitts 16 und/oder des Mundstücks 20 auszugleichen, ist zwischen dem Mundstück 20 und dem Filter- und Strahlrichterabschnitt 16 ein umlaufender Spalt vorgesehen. Auch bei geringfügigen Längenabweichungen ist es somit möglich, den Filter- und Strahlrichterabschnitt immer noch vollständig in das Düsengehäuse 18 einzuschrauben. In diesen umlaufenden Spalt zwischen dem Filter- und Strahlrichterabschnitt 16 und dem stromaufwärts gelegenen Ende des Mundstücks 20 kann unter Druck stehende Flüssigkeit eintreten. Wenn diese Flüssigkeit zwischen das Düsengehäuse 18 und den Filter- und Strahlrichterabschnitt 16 eindringt, so ist dies unkritisch, da das Sprühbild der Düse dadurch nicht beeinflusst wird. Wenn die Flüssigkeit jedoch zwischen das Mundstück 20 und das Düsengehäuse 18 gelangt, so kann sie eventuell zwischen Mundstück 20 und Düsengehäuse 18 bis zum stromabwärts gelegenen Endes des Mundstücks 20 gelangen und dort unkontrolliert austreten. Dies würde das Sprühbild der Düse und somit die Exaktheit des Flachstrahls 26 beeinträchtigen und das Mundstück 20 aufgrund des hohen Wasserdrucks sogar zerstören können.

Es ist daher erforderlich, zwischen dem Mundstück 20 und dem Düsengehäuse 18 eine Abdichtung vorzusehen. Diese Abdichtung wird durch Anbringen einer Metalllotnaht 28 am Übergang des stromaufwärts gelegenen Endes des Mundstücks 20 und der Innenwandung des Düsengehäuses 18 bereitgestellt. Die Metalllotnaht 28 läuft um 360° um und ist als Kehlnaht ausgebildet. Die Metalllotnaht 28 verhindert, dass Flüssigkeit aus dem Strömungskanal zwischen das Mundstück 20 und das Düsengehäuse 18 gelangt. Die Metalllotnaht 28 benötigt dabei lediglich einen geringen Bauraum. Um Platz für die Metalllotnaht 28 zu schaffen, ist das stromabwärts gelegene Ende des Filter- und Strahlrichterabschnitts 16 an seiner äußeren umlaufenden Kante abgeschrägt ausgebildet.

Bereits anhand der Darstellung der Fig. 1 ist zu erkennen, dass zwischen Mundstück 20 und Düsengehäuse 18 kein speziell ausgebildeter Dichtungssitz vorgesehen sein muss. Dies erleichtert die Herstellung des Düsengehäuses 18 und vor allem des aus Hartmetall hergestellten Mundstücks 20 erheblich. Die Metalllotnaht 28 füllt lediglich die umlaufende Ecke auf, die zwischen der Ringfläche am stromaufwärts gelegenen Ende des Mundstücks, die senkrecht zu einer Mittellängsachse der Hochdruckdüse 10 verläuft, und der Innenwandung des Düsengehäuses 18 gebildet ist, die parallel zur Mittellängsachse verläuft.

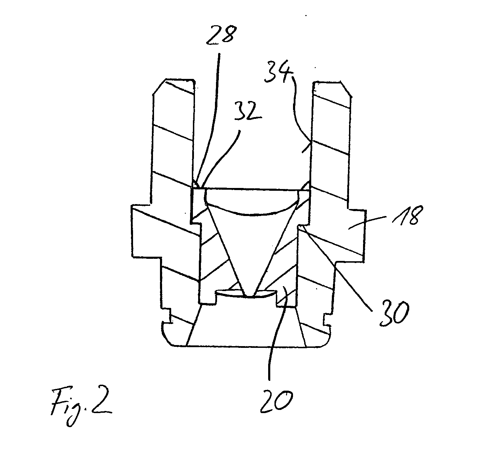

Die vergrößerte Darstellung der Fig. 2 zeigt das Mundstück 20 und das Düsengehäuse 18. Das Mundstück 20 ist in das Düsengehäuse 18 eingeschoben und wird gegen den Flüssigkeitsdruck im Düsengehäuse 18 mittels eines umlaufenden Absatzes 30 gehalten. Die Ringfläche 32 am stromaufwärts gelegenen Ende des Mundstücks 20 und die Innenwandung 34 des Düsengehäuses 18 stoßen senkrecht aufeinander. In diese umlaufende Ecke ist die Metalllotnaht 28 eingebracht, die eine zuverlässige Abdichtung zwischen Mundstück 20 und Düsengehäuse 18 bereitstellt.

Die Metalllotnaht 28 wird dabei mittels Laserlöten aufgebracht, wobei gleichzeitig ein Lotdraht zugeführt wird. Verwendet werden kann ein Halbleiterdiodenlaser, speziell ein InGaAs-Diodenlaser. Ein solcher Indium-Gallium-Arsenid-Diodenlaser stellt bei einer Wellenlänge von 810nm und einem Brennpunktfleck von etwa 0,12mm² eine ausreichende optische Leistung zur Verfügung, um eine zuverlässige Lotverbindung zu gewährleisten. Die Lötstelle kann dabei zunächst mit dem Laser vorgewärmt werden. Nach Zuführen des Lotdrahtes mit definierter Geschwindigkeit kann gegebenenfalls noch nachgewärmt werden, damit das Lot gleichmäßig verläuft. Selbst unterschiedliche Materialen, wie das als Hartmetall-Sinterteil hergestellte Mundstück 20 und das als Edelstahl-Drehteil hergestellte Mundstück 18 können zuverlässig miteinander verlötet werden. Es ist dabei festzuhalten, dass die Metalllotnaht 28 nicht den mechanischen Halt von Mundstück 20 und Düsengehäuse 18 sicherstellen soll und es daher nicht wie bei konventionellen Lötungen erforderlich ist, dass das Lot in den Spalt zwischen Mundstück 20 und Düsengehäuse 18 hineinläuft. Vielmehr soll mit der Metalllotnaht 28 lediglich eine Abdichtung bereitgestellt werden. Eine solche Abdichtung kann mittels Laserlöten mit hoher Prozesssicherheit bereitgestellt werden.

## Patentansprüche

1. Verfahren zum Herstellen einer mehrteiligen Sprühdüse, insbesondere einer Hochdruckdüse, **gekennzeichnet durch** Anbringen einer umlaufenden Metalllotnaht (28) mittels Laserlöten zum Abdichten von Einzelteilen der Düse gegeneinander.

2. Verfahren nach Anspruch 1, **gekennzeichnet durch** Verwenden eines Nd: YAG-Festkörperlaser.

3. Verfahren nach Anspruch 1 oder 2, **gekennzeichnet durch** Einsetzen eines Mundstücks (20) in ein Düsengehäuse (18) und Abdichten des Mundstücks (20) gegen das Düsengehäuse (18) mittels Anbringen einer umlaufenden Metalllotnaht (28).

4. Verfahren nach Anspruch 3, **dadurch gekennzeichnet, dass** das Mundstück (20) aus Hartmetall oder einer Hartmetalllegierung besteht.

5. Verfahren nach Anspruch 4, **dadurch gekennzeichnet, dass** das Düsengehäuse (18) aus Edelstahl oder einer Edelstahllegierung besteht.

6. Verfahren nach einem der vorstehenden Ansprüche, **gekennzeichnet durch** Anbringen der Metalllotnaht (28) als Kehlnaht in einem Bereich, in dem Flächen der abzudichtenden Einzelteile im wesentlichen rechtwinklig aufeinanderstoßen.

7. Verfahren nach wenigstens einem der vorstehenden Ansprüche, **gekennzeichnet durch** Herstellen von Einzelteilen der Düse mittels Metallpulverspritzguss.

8. Sprühdüse, insbesondere Hochdruckdüse mit einem Mundstück und einem Düsengehäuse, **dadurch gekennzeichnet, dass** das Mundstück (20) gegen das Düsengehäuse (18) mittels einer Metalllotnaht (28) abgedichtet ist.

9. Sprühdüse, insbesondere Hochdruckdüse nach Anspruch 8, **dadurch gekennzeichnet, dass** das Mundstück (20) aus Hartmetall oder einer Hartmetalllegierung und das Düsengehäuse (18) aus Edelstahl oder einer Edelstahllegierung besteht.
